# EUROPÄISCHE PATENTANMELDUNG

(11) **EP 2 056 039 A1**
(43) Veröffentlichungstag der Anmeldung: **06.05.2009**
(21) Anmeldenummer: 07021366.5
(22) Anmeldetag: 01.11.2007
(51) Int. Cl.: F24J 2/34, F24J 2/46

(54) **Sonnenkollektorsystem**

(71) Anmelder: Wagner & Co. Solartechnik GmbH, 35091 Cölbe (DE)
(72) Erfinder: Wagner, Andreas, 35091 Cölbe (DE); Kramer, Wolfgang, 35041 Marburg-Michelbach (DE)
(74) Vertreter: Buchhold, Jürgen

(57) **Zusammenfassung**

Ein Sonnenkollektorsystem (10) hat einen Kollektor (13), der einen Absorber (14) mit einem Kanalsystem (15), einem Vorlauf (16) und einem Rücklauf (18) für die Zirkulation eines Wärmetauscher-Strömungsmediums aufweist. Oberhalb des Kollektors (13) ist ein Speicher (12) angeordnet. Um den herkömmlich nötigen Aufwand für ein solches System zu verringern und um dessen Komponenten und deren Gestaltung derart zu konzipieren, dass es bei geringen Anschaffungs- und Montagekosten hohe Betriebssicherheit gewährleistet und sich außerdem für unterschiedliche Bedürfnisse und Anwendungsfälle eignet, weist das Ventil einen Temperaturfühler (34) auf, wobei dieser (34) und das Ventil (24) eine Baueinheit bilden, die als vormontiertes Bauelement mit eigenem Gehäuse (25) in die Vorlaufleitung (16) eingebaut wird.

## Beschreibung

Die Erfindung betrifft ein Sonnenkollektorsystem gemäß dem Oberbegriff von Anspruch 1.

Zur Nutzung von Sonnenenergie wird die aus der Strahlung in einem Kollektor aufgenommene Wärmeenergie entweder direkt oder über einen Wärmeübertrager an einen Verbraucher herangeführt oder in einem Zwischenspeicher aufgefangen, so dass sie nach Bedarf innerhalb einer Anlage bzw. eines Gebäudes zur Verfügung steht. In Wärmetauschern lässt man ein Medium zirkulieren, z.B. Wasser, Sole, Isobutan u.dgl. Dieser Wärmeträger muss in einem geschlossenen System unter Pumpwirkung oder frei strömen können, wobei Dichtheit und Korrosionsfreiheit bei ganz unterschiedlichen Temperaturen und klimatischen Einflüssen dauerhaft gewährleistet sein müssen.

Solaranlagen nach dem Thermosiphon- oder Schwerkraft-Prinzip haben gewöhnlich einen Sonnenkollektor und darüber einen Speicher. Wenn der Kollektor wärmer als der angeschlossene Speicher ist, zirkuliert ein Strömungsmedium - meist eine Frostschutzflüssigkeit - vom Kollektor in einen Wärmetauscher des Speichers und heizt diesen auf. Die Leistungsfähigkeit derartiger relativ kostengünstiger Anlagen war anfangs recht gering; auch bei fehlender Wasserzapfung trat im Speicher kaum Überhitzung auf. Weiterentwicklungen ermöglichen inzwischen höhere Temperaturen, so dass im Kollektor und auch im Speicher über 100 °C erreicht werden und aus dem Sicherheitsventil des Speichers heißes Wasser austritt. Geschieht dies öfter, so verkalken die Dichtflächen und das Sicherheitsventil wird dauerhaft undicht; es tropft ständig Leitungswasser heraus.

Zur Abhilfe hat man die Kollektoren im Sommer abgedeckt, was zu großem Wartungs- und Arbeitsaufwand zwingt. Alternativ baut man besondere Kühlkörper ein, die bei hoher Speichertemperatur mit Thermostat-Regelung betrieben werden. Diese Kühlkörper erfordern einen hohen Konstruktionsaufwand und sind entsprechend kostenintensiv. Ein anderer Weg war daher, für solche Anlagen thermische Ablaufsicherungen vorzusehen, damit ab einer Grenztemperatur von z.B. 95 °C Warmwasser abgeleitet wird. Das bedingt jedoch hohen Wasserverlust, und wegen der thermischen Belastung ist eine Ventilsonderkonstruktion unerlässlich.

Aus DE-A1-199 38 145 ist ein durch die Temperatur des Wassers im Speicherbehälter gesteuertes Absperrventil bekannt, welches in der Zulaufleitung und auch in der Ablaufleitung des Speicherbehälters angeordnet sein kann. Die Erfassung der Temperatur erfolgt mit einem separaten Temperaturfühler, der auf dem Kollektor oder im Speicher angeordnet ist. Nachteilig hierbei ist der relativ hohe Kostenaufwand für das Ventil und den separaten Temperaturfühler. Da beide getrennt zu installieren und über stromführende oder hydraulische Leitungen miteinander zu verbinden sind, können zusätzlich Montagefehler auftreten.

Ein in DE-U1-20 2006 016 098 offenbartes Sonnenkollektorsystem verwendet als Überhitzungsschutz ebenfalls ein im Vorlaufbereich angeordnetes thermostatbetriebenes Ventil mit einem Thermostaten zu dem eine mit dem Speicher verbundene Sensorleitung führt. Damit entstehen auch hier bedingt durch zusätzlichen Material- und Herstellungsaufwand erhöhte Herstellkosten. Hinzu kommt, dass die Montage des Ventils innerhalb des Speichers an einem Schraubstutzen erfolgt, so dass die Temperatur direkt im Speicher erfasst wird. Der Zugang zum Ventil ist erschwert, was sich ebenfalls ungünstig auf die Herstell- und Wartungskosten auswirkt.

Es ist ein wichtiges Anliegen der Erfindung, unter Überwindung der Nachteile des Standes der Technik ein verbessertes Sonnenkollektorsystem zu schaffen, das mit einfachen Mitteln kostengünstig aufgebaut ist. Angestrebt wird insbesondere, den herkömmlich nötigen Aufwand für ein solches System zu verringern und dessen Komponenten und Gestaltung derart zu konzipieren, dass es bei geringen Anschaffungs- und Montagekosten hohe Betriebssicherheit gewährleistet und sich außerdem für unterschiedliche Bedürfnisse und Anwendungsfälle eignet.

Hauptmerkmale der Erfindung sind in Anspruch 1 angegeben. Ausgestaltungen sind Gegenstand der Ansprüche 2 bis 15.

Bei einem Sonnenkollektorsystem mit wenigstens einem Kollektor, der einen Absorber mit einem Kanalsystem aufweist, mit wenigstens einem oberhalb des Kollektors angeordneten Speicher, der für die Zirkulation eines Wärmetauscher-Strömungsmediums über eine Vorlaufleitung und eine Rücklaufleitung mit dem Kanalsystem des Absorbers strömungsverbunden ist, und mit einem Überhitzungsschutz, der ein im Vorlaufbereich des Speichers angebrachtes thermostatbetriebenes Ventil aufweist, sieht die Erfindung vor, dass das Ventil einen Temperaturfühler aufweist und mit diesem gemeinsam in der Vorlaufleitung angeordnet ist.

Die Anordnung des thermostatbetriebenen Ventils gemeinsam mit dem Temperaturfühler in der Vorlaufleitung ermöglicht eine sehr viel kostengünstigere Ausbildung einer Thermosiphon-Anlage, da keine aufwendige Montage separater Fühler oder Verbindungsleitungen notwendig ist. Gleichzeitig sorgt die Anordnung dafür, dass bei Überschreiten einer bestimmten - ggf. voreinstellbaren - Temperatur der Speicher nicht weiter aufgeheizt wird. Dessen Sicherheitsventil spricht selbst bei ständiger Energiezufuhr in den Kollektor gar nicht erst an; es gelangt keine weitere Wärme in den Speicher und man muss auch keine Wartungsarbeiten (wie das Abdecken des Kollektors) durchführen. Das Ventil und der Fühler sind innerhalb der Vorlaufleitung rasch und bequem zugänglich, was die Herstell- und Wartungskosten weiter reduziert.

Die Erfindung gewährleistet zugleich eine deutliche Energieersparnis, denn die Anlage arbeitet ohne Überhitzungsprobleme, wodurch eine deutlich verbesserte Dämmung realisiert werden kann. Dadurch ergibt sich eine deutlich höhere Effizienz mit deutlich reduziertem Nachheizbedarf. Dies wiederum ist beim Einsatz z.B. in südlichen oder östlichen Ländern wichtig, deren Stromnetz-Kapazitäten vielfach nicht für den hohen Leistungsbedarf elektrischer Heiz- und Kühlsysteme ausgelegt sind und bei Lastspitzen versagen können.

Konstruktiv ist es günstig, wenn der Fühler direkt im Ventil untergebracht ist. Diese Bauform lässt sich nicht nur äußerst kostengünstig realisieren. Auch Herstellung und Montage der Anlage werden vereinfacht; mögliche Montagefehler wirksam vermieden. Der Fühler sorgt in Kombination mit dem von ihm direkt gesteuerten Ventil dafür, dass die Aufheizung des Solarspeichers begrenzt wird, um eine Überhitzung oder eine Verkalkung des Systems zu vermeiden. Insbesondere wird dadurch die Gefahr abgewendet, dass es bei Temperaturen von z.B. über 60°C zu Verbrühungen kommt.

Durch die Lösung gemäß der vorliegenden Erfindung lässt sich das erfindungsgemäße Thermostatventil mit deutlich weniger Aufwand realisieren bzw. verwenden. Bei der Anordnung des Fühlers im Ventil müssen kein separater Sensor und kein Kapillarrohr bzw. keine Verbindungsleitung vorgesehen werden, so dass der Materialaufwand und der Herstellungsaufwand deutlich reduziert sind. Zudem wird der Zusammenbau vereinfacht, so dass auch weniger Montagefehler auftreten. Insbesondere entfällt die technisch aufwendige hydraulische Verbindung zwischen Kapillarrohr und Thermostatventil. Ebenfalls können der Drehknopf zur Temperatureinstellung sowie die Fühlerhülse im Speicher oder im Kollektor entfallen.

Dazu trägt insbesondere bei, wenn der Fühler und das Ventil eine Baueinheit bilden. Dabei kann der Fühler als eine Art Ausdehnungsvolumen ausgebildet sein, welches über einen Stößel einen Ventildeckel oder ein Ventilsperrorgan trägt. Der Stößel fungiert dabei als eine Art Kolben, der den Ventildeckel gegen einen Dichtsitz presst. Der Fühler, der von dem Medium umströmt wird, kann beispielsweise mit Wachs gefüllt sein.

Der Fühler zum Erfassen der Temperatur wird unmittelbar von dem als Wärmeträger fungierenden Medium umströmt, wobei das Medium direkt als Stellglied fungiert. Durch die Anordnung im Vorlauf, bevorzugt am oder im Ventil, sind keine langen Übertragungswege für vom Fühler ausgesendete Signale, beispielsweise über hydraulische Leitungen, elektrische Leitungen etc. erforderlich. Das Ventil spricht so entsprechend schneller an und es entstehen keine Übertragungsprobleme. Das Ventil, das im Vorlauf angeordnet ist, kann unmittelbar bei Durchfluss des Mediums sperren oder öffnen. Das gesamte Sonnenkollektorsystem lässt sich so einfacher Installieren, Einstellen und Warten. In einer Ausführungsform ist daher vorgesehen, dass das Ventil von einem als Wärmeträger fungierenden Medium durchströmbar ist, so dass der Fühler in Kontakt mit dem durchströmenden Medium bringbar ist, um das Medium als Stellgröße zu verwenden. Auf diese Weise kann das Ventil auf einfache Weise geöffnet und geschlossen werden.

Der Fühler und das Ventil sind in einem mit wenigstens einem Durchbruch versehenen Hüllkörper angeordnet. Auf diese Weise kann das durchströmende Medium, beispielsweise ein Wärmeträger, das Ventil durchströmen und dabei als Stellgröße für das Ventil dienen. In der Regel schließt sich das Ventil, wenn die Temperatur der durchströmenden Flüssigkeit oder des durchströmenden Mediums eine vorgebbare Temperatur von beispielsweise 60° oder 80°C überschreitet. Bei Sonnenkollektoren steigt nach dem Absperren bei weiterer Sonneneinstrahlung die Kollektortemperatur weiter an, bis zum Beispiel Dampf entsteht. Dieser Dampf kann die Flüssigkeit von dem Thermostatventil verdrängen und dessen Kondensationswärme in der Nähe eines thermostatischen Stellglieds das Ventil dauerhaft geschlossen halten.

Der Dampf kann ein Flüssigkeitsvolumen im Sonnenkollektor verdrängen und es über den Rücklauf in ein am Speicher vorsehbares Ausdehnungsgefäß drücken. Der Dampf würde sich dann im Kollektor weiter erhitzen, so dass überhitzter Dampf entsteht, dessen Druck trotzt steigender Temperaturen nur noch unwesentlich ansteigt, so dass selbst bei hohen Kollektortemperaturen von über 180°C kein Abblasedruck an einem entsprechenden Sicherheitsventil erreicht werden würde. Das System wird nach der Überhitzungsphase und einer entsprechenden Abkühldauer von zum Beispiel einem Tag automatisch in einem Normalmodus weiterarbeiten.

Konstruktiv ist es weiter günstig, wenn der Hüllkörper einen Ventilsitz für das Ventil bildet, ferner wenn der Hüllkörper einen Rohrabschnitt, insbesondere einen Abschnitt der Vorlaufleitung bildet. Diese Anordnung lässt sich äußerst einfach und rationell installieren und ebenso einfach warten. Weitere Vorteile ergeben sich, wenn der Hüllkörper, der Fühler und das Ventil eine Baueinheit bilden.

Bevorzugt schließt das Ventil entgegen der Strömungsrichtung des Mediums gegen den Ventilsitz, so dass sich der Temperaturfühler stets innerhalb des erwärmten Mediums befindet und keinem überhitzten Dampf ausgesetzt wird. Je nach Einsatzzweck der Anlage kann es jedoch zweckmäßig sein, das Ventil derart in die Vorlaufleitung einzusetzen, dass es in Strömungsrichtung gegen den Ventilsitz schließt. Auch dies lässt rasch und kostengünstig realisieren. Dazu muss die Ventil-Baugruppe lediglich um 180° gedreht werden.

Dazu ist weiter vorgesehen, dass die gesamte Baueinheit in die Vorlaufleitung einsetzbar ist. In dieser Ausführungsform weisen der als Gehäuse dienende Hüllkörper und das Vorlaufrohr entsprechende, komplementäre Verbindungselemente, wie beispielsweise Gewinde und/oder Flanschabschnitte auf.

Sehr günstig ist ferner, wenn am Thermostatventil wenigstens ein Temperatur-Grenzwert einstellbar ist. Im Betrieb schließt das Ventil bei Überschreitung von z.B. 90 °C. Daher steigt die Temperatur im Absorber und es entsteht Dampf, der die Solarflüssigkeit über den Rücklauf in einen Wärmetauscher drückt, z.B. in ein Ausdehnungsgefäß. Am Kollektorrücklauf verbleibt infolgedessen nur ein kleiner Rest Flüssigkeit, so dass sich im Absorber ein Druck-/Temperatur-Gleichgewicht mit überhitztem Dampf einstellt und die Absorbertemperatur deutlich höher liegt, als es an sich dem Flüssigkeits-Sattdampfdruck entspricht.

Ist das Wasser am Einsatzort stark kalkhaltig, kann man die Grenztemperatur am Thermostatventil auf ca. 60 °C einstellen, so dass eine Kalkausfällung zuverlässig vermieden wird.

Man erkennt, dass das System als Sonnenkollektorsystem zur thermosiphonischen Umwälzung in Solaranlagen ausgebildet ist, wobei die Umwälzung durch das thermostatbetriebene Ventil bei Auftreten einer vorgebbaren Temperatur gestoppt wird.

Ähnlich wie zuvor beschrieben in Bezug auf ein Sonnenkollektorsystem zur thermosiphonischen Umwälzung kann auch ein sicherer Stillstandsbetrieb bei Sonnenkollektoren nach Art eines zwangsumwälzenden Sonnenkollektorsystems ausgebildet sein. Bei zwangsumgewälzten Sonnenkollektorsystemen können sich der Kollektor bzw. die Kollektoren unterhalb des Speichers befinden, z.B. bei Dachheizzentralen.

Im Gegensatz zu konventionellen Sonnenkollektorsystemen, bei denen bei einer maximalen Speicheraufheizung eine Solarkreispumpe abschaltet und dann der entstehende Dampf die Flüssigkeit aus den Kollektoren verdrängt und damit den Druck des Sonnenkollektorsystems stabil unterhalb des Abblasedrucks hält, strömt bei tiefer angeordneten Kollektoren automatisch, d.h. auch im Stillstand, Flüssigkeit in den Kollektor, so dass weiterhin Sattdampf produziert wird, der gemäß dem Kondensationsprinzip unerwünscht den Speicher aufheizt oder zu einem ansteigenden Überdruck in dem Solarkreis führt, bis über das Sicherheitsventil die Solarflüssigkeit abgeblasen wird.

Das erfindungsgemäße thermostatbetriebene Ventil verschließt hingegen bei Erreichen einer vorbestimmten Temperatur den Vorlauf, z.B. das Vorlaufrohr, so dass der Dampf die Kollektorflüssigkeit in das angeschlossene Ausdehnungsgefäß herausdrückt. Das thermostatbetriebene Ventil, das beispielsweise als Thermostatventil ausgebildet ist, und die Pumpenregelung werden so aufeinander abgestimmt, das bei Erreichen eines ersten Temperaturwertes, zum Beispiel von 75°C, die Pumpe abgeschaltet wird, und bei Erreichen eines darüber liegenden zweiten Temperaturwertes, zum Beispiel bei 85°C, schließt dann das Thermostatventil.

Wenn die Vor- und Rücklaufanschlüsse am Kollektor auf gleicher Höhe und/oder unmittelbar nebeneinander angeordnet sind, ist das für Thermosiphon-Solaranlagen von großem Vorteil, zumal ein herkömmlich zusätzlich benötigtes, gewöhnlich frei verlegtes Rücklaufrohr entfallen kann.

Der Speicher kann oberhalb oder unterhalb des Kollektors angeordnet werden. Auch ist eine Kombination denkbar, so dass das Sonnenkollektorsystem Platz sparend oder an enge Räumlichkeiten angepasst ausgebildet werden kann.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Darin zeigen:
- Fig. 1: eine Schrägansicht einer Solaranlage mit einem Kollektor im Hochformat,
- Fig. 2: eine Schrägansicht auf eine Solaranlage mit zwei Kollektoren,
- Fig. 3: eine schematische Seitenansicht eines Bereichs des Vorlaufs mit einem thermostatbetriebenen Ventil in einem Querschnitt und
- Fig. 4: eine schematische Übersicht über ein Sonnenkollektorsystem.

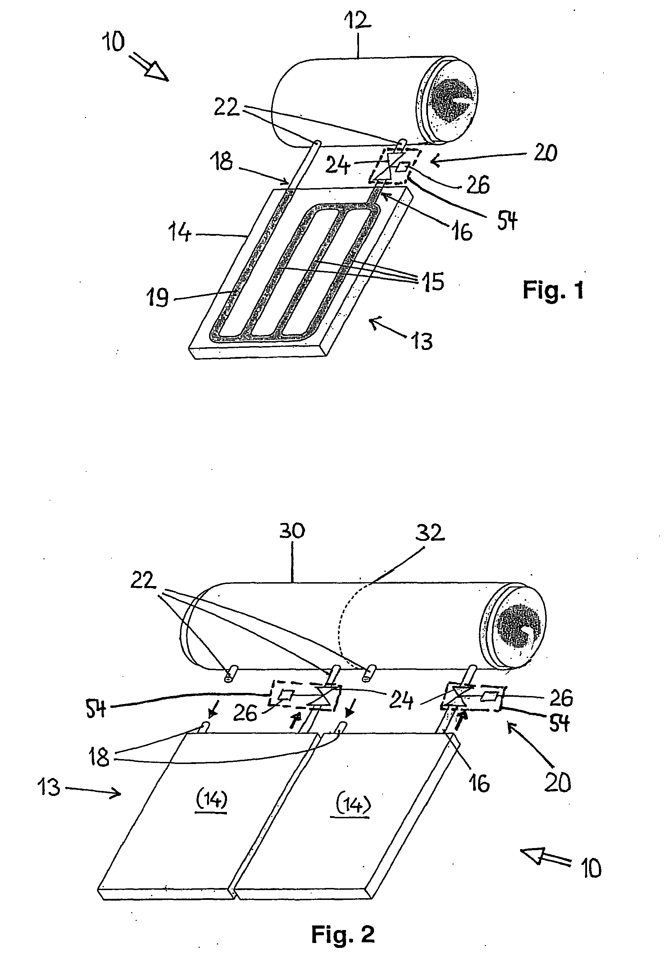

Im Ausführungsbeispiel der Fig. 1 ist ein Kollektorsystem 10 mit einem aufgesetzten Speicher 12 dargestellt, wobei einzelne Bauelemente, eine Glas- oder Folienabdeckung u.dgl. der Übersicht halber weggelassen sind. Das System 10 enthält einen Kollektor 13, der an einem Absorber 14 eine Anzahl ausgeformter Kanäle 15 aufweist, die herkömmlich oder im Rollbondverfahren hergestellt sein können. Die Kanäle 15 sind an ihren oberen und unteren Enden quer strömungsverbunden, also parallel geschaltet. Sie können aber auch linear gestaltet sein und zueinander parallel verlaufen; verschachtelte und/oder mäanderförmige Anordnungen sind aber ebenfalls möglich und erfindungsgemäß vorgesehen. Eine transparente Abdeckung - meist aus Glas - deckt den Kollektor 13 ab.

Der Kollektor 13 kann zur Installation im Hochformat ausgelegt sein; alternativ kann er Querformat haben. Er zeichnet sich dadurch aus, dass eine Vorlaufleitung 16 und eine Rücklaufleitung 18 am Absorber 14 parallel zueinander und/oder auf gleicher Höhe angeschlossen sind. Statt eines üblicherweise außen verlegten Rücklaufrohrs enthält der Absorber 14 ein integriertes Hauptrohr 19, dessen Querschnitt größer ist als derjenige der übrigen Rohrleitungen bzw. Kanäle 15 und das zweckmäßig mit einer starren oder flexiblen, jedoch insgesamt relativ kurzen Rücklaufleitung 18 verbunden oder verbindbar ist, die zum Speicher 12 führt. Dank dieses begrenzten Wegs werden so bei gleichzeitiger Kostensenkung herkömmlich häufige Nachteile und Störungen wie nächtlich umgekehrte Zirkulation, Wärmeverluste, erhöhter Isolationsaufwand u.dgl. auf einfache Weise vermieden. Zwar sind Kollektoren bekannt, bei denen das Rücklaufrohr gleichfalls im Kollektor angeordnet ist, aber ohne thermische Anbindung an die Absorberplatte. Derartige Kollektoren konnten jedoch die nächtliche Zirkulation nur unzureichend vermeiden.

Zwischen dem Kollektor 13 und dem Speicher 12, die an Rohrstutzen 22 mit den Vorlauf- und Rücklaufleitungen 16, 18 verbunden sind, ist ein Überhitzungsschutz 20 vorgesehen. Er besteht aus einem Ventil 24 mit einem Thermostaten 26. Durch dessen (in Fig. 1 nicht dargestellten) Sensor wird die Temperatur des im System strömenden Mediums M erfasst. Überschreitet die erfasste Temperatur einen Grenzwert, so schließt der Thermostat 26 das Ventil 24, wodurch eine weitere Aufheizung des Speichers 12 verhindert wird.

Ein solcher Überhitzungsschutz 20 kann auch bei einem System mit mehreren Kollektoren eingesetzt werden, wie Fig. 2 verdeutlicht. Hierbei liegen zwei Kollektoren 13 nebeneinander, die jeweils einen Absorber 14 enthalten und mit dessen Vorlauf- und Rücklaufleitungen 16, 18 - bevorzugt mittels (nicht dargestellten) Steckrohranschlüssen - jeweils an Rohrstutzen 22 eines Doppelspeichers 30 anschließen. Letzterer kann in einem Doppelmantel-Wärmetauscher zur Separierung zweier Kreisläufe eine Trennwand 32 aufweisen. Sie optimiert die Wärmeschichtung und verhindert, dass sich aufsteigendes heißes Fluid des einen Absorbers 14 mit dem kühleren Rücklauffluid des anderen Absorbers vermischen könnte.

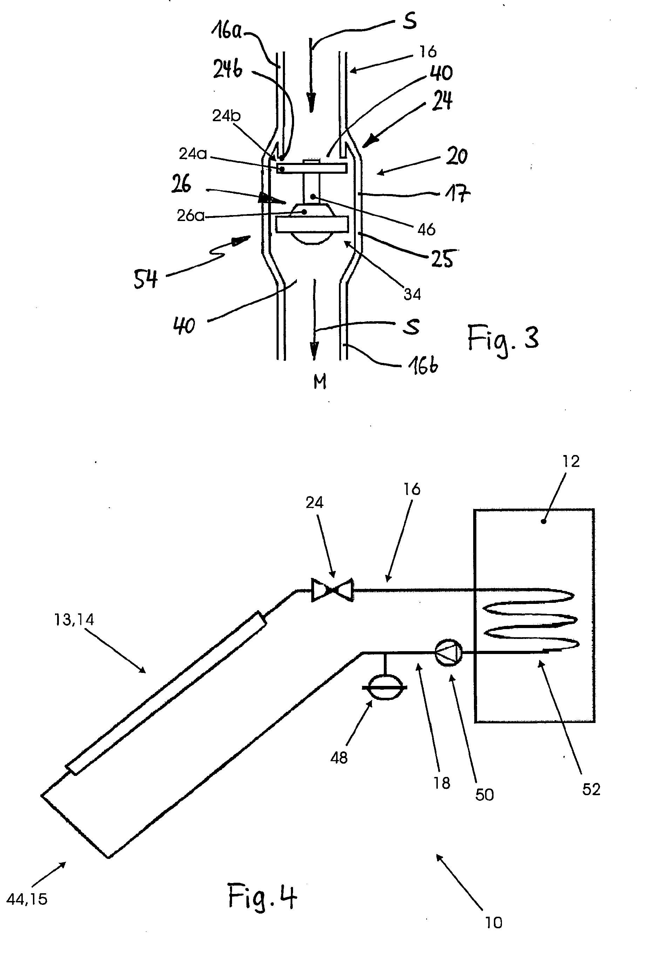

Fig. 3 zeigt den in der Vorlaufleitung 16 eingebrachten Überhitzungsschutz 20 mit seinem Ventil 24 und dem damit gekoppelten Thermostaten 26. Beide bilden zusammen ein Thermostatventil 54, das einen Temperaturfühler 34 aufweist, der über ein Stellglied 46 mit dem Ventil 24 gekoppelt ist. Letzteres hat einen Ventilteller 24a, der zum Schließen des Ventils 24 von dem Stellglied 46 dichtend gegen einen Ventilsitz 24b gepresst wird.

Ein solches Thermostatventil 54 lässt sich äußerst kostengünstig realisieren, denn der Fühler 34 ist unmittelbar im Ventil 24 untergebracht, d.h. der Fühler 34 bzw. der Thermostat 26 und das Ventil 24 bilden eine Baueinheit, die rasch und bequem in das System 10, insbesondere in die Vorlaufleitung 16 eingebaut werden kann. Separate Sensoren, die über technisch anspruchsvolle hydraulische Verbindungen (Kapillarrohre) mit dem Ventil verbunden werden müssen, sind ebenso wenig notwendig wie aufwendige Durchführungen durch die Wandungen der Vorlaufleitung oder des Ventils. Insbesondere benötigt man keinen separaten Fühler im Speicher 12, der dazu mit zusätzlichen Durchbrüchen versehen werden muss. Die erfindungsgemäße Anordnung ist demgegenüber sehr viel einfacher aufgebaut, so dass die Gesamtkosten des Systems 10 gegenüber herkömmlichen Anlagen deutlich niedriger liegen. Montage und Wartung werden ebenfalls vereinfacht.

Wie Fig. 3 weiter zeigt, ist das thermostatbetriebene Ventil 24 gemeinsam mit dem Temperaturfühler 34, dem Stellglied 46 und dem Ventildeckel 24a als vormontierbare Baueinheit im Vorlaufrohr 16 eingesetzt. Dieses ist in der Darstellung von Fig. 3 mit seinem an den Ventilsitz 24b anschließenden Abschnitt 16a mit dem Kollektor 13 verbunden, während der gegenüber liegende Abschnitt 16b des Vorlaufrohres 16 an den Speicherbehälter 12 angeschlossen ist. Man kann das Ventil 24 aber auch anders herum in die Vorlaufleitung 16 einsetzen, so dass der Ventilsitz 24b und der Ventilteller 24a dem Speicher 12 zugewandt sind. In diesem Fall schließt das Ventil 24 in Strömungsrichtung S.

Der Vorlauf 16 ist als zylindrisches Rohr ausgebildet mit einer etwa in der Mitte des dargestellten Bereichs angeordneten Ausbuchtung 17. Diese bildet einen Hüllkörper 25 mit zwei Durchbrüchen 40, der mithin ein Gehäuse für das Ventil 54 und den Fühler 34 bildet. Das Gehäuse 25 kann einstückig mit dem Rohr 16 sein. Es kann aber auch als Rohrstück separat ausgebildet sein und mittels (nicht dargestellter) Schellen oder Überwurfmuttern dichtend in die Vorlaufleitung 16 eingesetzt sein.

In dem Ventil 24 ist der Fühler 34 integriert ausgebildet, der von dem Medium M in Strömungsrichtung S umströmt wird. Der Fühler 34 ist somit stets im Kontakt mit dem Medium M, welches direkt als Stellgröße für das Ventil 24 fungiert. Der Fühler 34 ist als thermostatisches Arbeitselement mit einem Thermostatkopf 26a ausgebildet. Der Thermostatkopf 26a ist mit einem Dehnstoff, beispielsweise mit Wachs gefüllt. Der Dehnstoff ist so gewählt, dass das Ventil 24 bei einem gewünschten Sollwert, genauer einem Temperatur-Sollwert, schließt bzw. öffnet.

In Abhängigkeit der Temperatur des Mediums M und damit der Ausdehnung des Dehnstoffs in dem Thermostatkopf 26a wird das Stellglied 46, z.B. ein Stößel, aus dem Thermostatkopf 26 ausgetrieben. Über den Stößel 46 trägt der Fühler 34 den Ventildeckel 24a, der an einem Ventilsitz 24b im Gehäuse 25 zum Anliegen kommt. Legt sich der Ventildeckel 24a auf den Ventilsitz 24b wird das Ventil 24 geschlossen. Zieht der Thermostatkopf 26a des Fühlers 34 den Ventildeckel 24a zurück, wird das Ventil 24 geöffnet. Das Medium M kann flüssig, gasförmig oder teils flüssig, teils gasförmig ausgebildet sein. Bevorzugt ist das Medium M als Wasser bzw. Wasserdampf ausgebildet.

In der Regel schließt sich das Ventil 24, das sich im Vorlauf 16 zwischen Kollektor 13 und Speicher 12 befindet, wenn die durchströmte Flüssigkeit M eine Maximaltemperatur von z.B. 80°C überschreitet. Bei Sonnenkollektoren steigt jedoch nach dem Absperren bei weiterer Sonneneinstrahlung die Kollektortemperatur weiter an bis schließlich gegebenenfalls Dampf entsteht, der die Flüssigkeit vor dem Thermostatventil 24, 54 verdrängt. Die Kondensationswärme des Dampfes in der Nähe des thermostatischen Stellgliedes 34, 46 hält das Ventil 24 dauerhaft geschlossen. Der Dampf verdrängt schließlich das Flüssigkeitsvolumen im Sonnenkollektor 13 und drückt es beispielsweise über den Rücklauf 18 in ein am Speicher befindliches (nicht dargestelltes) Ausdehnungsgefäß. Das in der Darstellung von Fig. 3 entgegen der Strömungsrichtung S schließende Ventil 24 wird dennoch stets fest verschlossen.

Der Dampf im Kollektor 13 wird weiter erhitzt, so dass überhitzter Dampf entsteht, dessen Druck trotz steigender Temperaturen nur noch unwesentlich ansteigt, wodurch selbst bei hohen Kollektortemperaturen von z.B. 180°C kein Abblasedruck am Sicherheitsventil des Speichers 12 erreicht wird. Die Anlage 10 kann nach der Überhitzungsphase am nächsten Tag automatisch wieder in Normalfunktion weiterarbeiten.

Fig. 4 zeigt eine schematische Übersicht über ein Sonnenkollektorsystem 10. Das Sonnenkollektorsystem 10 umfasst den Speicher 12, den Kollektor 13 mit dem Absorber 14, ein Zirkulationssystem 44 mit entsprechenden Kanälen 15, insbesondere mit einem Vorlauf 16 und einem Rücklauf 18, einen Tank 48, eine Fördereinrichtung 50 und einen Wärmetauscher 52. Der Speicher 12 ist als Wärmespeicher ausgebildet, in welchem ein als Wärmeträger fungierendes Medium M gespeichert wird. Der Speicher 12 ist über den Vorlauf 16 und den Rücklauf 18 mit dem Zirkulationssystem 44, genauer dessen Kanälen 15, mit dem Kollektor 12 verbunden. Der Vorlauf 16 verbindet über das Ventil 24 den Kollektor 12, der den Absorber 14 umfasst, mit dem Speicher 12, genauer mit dem in dem Speicher 12 angeordneten Wärmetauscher 52.

Das Ventil 24 ist als thermostatbetriebenes Absperrventil gemäß Fig. 4 ausgebildet, wobei der hier nicht dargestellte Fühler des Ventils 24 bevorzugt in dem Ventil 24 selbst angeordnet ist. Der Rücklauf 18 ist mit dem Kollektor 13 über die Kanäle 15 des Zirkulationssystems 44 zu verbunden, und führt zu dem Speicher 12, genauer zu dem Wärmetauscher 52. Von dem entsprechenden Abschnitt des Zirkulationssystems 44 zweigt ein Kanal zu dem Tank 48 ab, welcher als Ausdehnungsgefäß, als Vorratstank oder dergleichen ausgebildet sein kann. In dem Rücklauf 18 ist vor der Mündung in den Speicher 12 die Fördereinrichtung 50 angeordnet, Die Fördereinrichtung 50 kann als Pumpe oder dergleichen ausgebildet sein.

Die Erfindung ist nicht auf eine der vorbeschriebenen Ausführungsformen beschränkt, sondern in vielfältiger Weise abwandelbar. Man erkennt jedoch, dass ein Sonnenkollektorsystem 10 einen Kollektor 13 hat, der einen Absorber 14 mit einem Kanalsystem 15, einem Vorlauf 16 und einem Rücklauf 18 für die Zirkulation eines Wärmetauscher-Strömungsmediums aufweist. Oberhalb des Kollektors 13 ist ein Speicher 12 angeordnet. Um den herkömmlich nötigen Aufwand für ein solches System zu verringern und um dessen Komponenten und deren Gestaltung derart zu konzipieren, dass es bei geringen Anschaffungs- und Montagekosten hohe Betriebssicherheit gewährleistet und sich außerdem für unterschiedliche Bedürfnisse und Anwendungsfälle eignet, weist das Ventil 24 einen Temperaturfühler 35 auf, wobei dieser und das Ventil 24 eine Baueinheit bilden, die als vormontiertes Bauelement mit eigenem Gehäuse 25 in die Vorlaufleitung 16 eingebaut wird.

Die Erfindung betrifft ferner eine Vorrichtung 20 zur Temperaturbegrenzung bei thermosiphonischer Umwälzung in Solaranlagen, mit einem Thermostatventil 54, das die Umwälzung bei einer festgelegten oder einstellbaren Temperatur durch Verschließen eines Ventils 24 unterbricht; wobei der Sensor 34 zur Erfassung der Temperatur und das Ventil 24 als Bau- bzw. Wirkungseinheit in der Vorlaufleitung 16 angeordnet sind. Die Vorrichtung 20 zur Temperaturbegrenzung kann auch in zwangsumgewälzten Solaranlagen verwendet werden. Wichtig ist, dass das die Anlage durchströmende Medium, wie z.B. Wasser, Sole oder Dampf, die Betätigung des Ventils 24 auslöst und den Durchfluss unterbricht.

Sämtliche aus den Ansprüchen, der Beschreibung und der Zeichnung hervorgehenden Merkmale und Vorteile, einschließlich konstruktiver Einzelheiten und räumlicher Anordnungen, können sowohl für sich als auch in den verschiedensten Kombinationen erfindungswesentlich sein.

### Bezugszeichenliste

- M: Strömungsmedium
- 10: Kollektorsystem
- 12: Speicher
- 13: Kollektor
- 14: Absorber
- 15: Kanäle
- 16: Vorlauf(rohr)
- 16a: Abschnitt
- 16b: Abschnitt
- 17: Ausbuchtung/Gehäuse
- 18: Rücklauf(rohr)
- 19: Hauptrohr
- 20: Überhitzungsschutz
- 22: Rohrstutzen
- 24: Ventil
- 24a: Ventilteller
- 24b: Ventilsitz
- 25: Hüllkörper / Gehäuse
- 26: Thermostat
- 26a: Thermostatkopf
- 30: Doppelspeicher
- 31: Trennwand
- 32: Schraubstutzen
- 34: Fühler
- 35: Dichtungen
- 36: Flansch
- 37: (Außen-)Gewinde
- 38: Überwurfmutter
- 39: Ende
- 40: Durchbruch
- 46: Stellglied/Stößel
- 48: Tank
- 50: Fördereinrichtung
- 52: Wärmetauscher
- 54: Thermostatventil

## Patentansprüche

1. Sonnenkollektorsystem (10) mit wenigstens einem Kollektor (13), der einen Absorber (14) mit einem Kanalsystem (15) aufweist, mit wenigstens einem oberhalb des Kollektors (13) angeordneten Speicher (12), der für die Zirkulation eines Wärmetauscher-Strömungsmediums über eine Vorlaufleitung (16) und eine Rücklaufleitung (18) mit dem Kanalsystem (15) des Absorbers (14) strömungsverbunden ist, und mit einem Überhitzungsschutz (20), der ein im Vorlaufbereich des Speichers (12) angebrachtes thermostatbetriebenes Ventil (24) aufweist, **dadurch gekennzeichnet, dass** das Ventil (24) einen Temperaturfühler (34) aufweist und mit diesem gemeinsam in der Vorlaufleitung (16) angeordnet ist.

2. System nach Anspruch 1, **dadurch gekennzeichnet, dass** der Fühler (34) im Ventil (24) untergebracht ist.

3. System nach Anspruch 1 oder 2, **dadurch gekennzeichnet, dass** der Fühler (34) und das Ventil (24) eine Baueinheit bilden.

4. System nach einem der Ansprüche 1 bis 3, **dadurch gekennzeichnet, dass** das Ventil (24) von einem als Wärmeträger fungierenden Medium (M) durchströmbar ist, so dass der Fühler (34) in Kontakt mit dem durchströmenden Medium (M) bringbar ist, um das Medium (M) als Stellgröße zu verwenden.

5. System nach einem der Ansprüche 1 bis 4, **dadurch gekennzeichnet, dass** der Fühler (34) und das Ventil (24) in einem mit wenigstens einem Durchbruch (40) versehenen Hüllkörper (25) angeordnet sind.

6. System nach Anspruch 5, **dadurch gekennzeichnet, dass** der Hüllkörper (25) einen Ventilsitz (24b) für das Ventil (24) bildet.

7. System nach Anspruch 5 oder 6, **dadurch gekennzeichnet, dass** das Ventil (24) in Strömungsrichtung (S) oder entgegen der Strömungsrichtung (S) gegen den Ventilsitz (24b) schließt.

8. System nach einem der Ansprüche 5 bis 7, **dadurch gekennzeichnet, dass** der Hüllkörper (25) einen Abschnitt der Vorlaufleitung (16) bildet.

9. System nach einem der Ansprüche 5 bis 8, **dadurch gekennzeichnet, dass** der Hüllkörper (25), der Fühler (34) und das Ventil (24) eine Baueinheit bilden.

10. System nach Anspruch 9, **dadurch gekennzeichnet, dass** die Baueinheit in die Vorlaufleitung (16) einsetzbar ist.

11. System nach einem der Ansprüche 1 bis 10, **dadurch gekennzeichnet, dass** am Thermostatventil (24) wenigstens ein Temperatur-Grenzwert einstellbar ist.

12. System nach Anspruch 11, **dadurch gekennzeichnet, dass** diskrete Grenzwerte einstellbar sind, z.B. 90 °C und 60 °C.

13. System nach einem der Ansprüche 1 bis 12, **dadurch gekennzeichnet, dass** es als Sonnenkollektorsystem zur thermosiphonischen Umwälzung in Solaranlagen ausgebildet ist, wobei die Umwälzung durch das thermostatbetriebene Ventil (24) bei Auftreten einer vorgebbaren Temperatur gestoppt wird.

14. System nach einem der Ansprüche 1 bis 13, **dadurch gekennzeichnet, dass** das Sonnenkollektorsystem (10) als ein Zwangsumwälzendes Sonnenkollektorsystem ausgebildet ist.

15. System nach einem der Ansprüche 1 bis 14, **dadurch gekennzeichnet, dass** die Vor- und Rücklaufleitungen (16; 18) am Kollektor (13) auf gleicher Höhe angeordnet sind, vorzugsweise parallel nebeneinander oder zueinander.
